# EUROPEAN PATENT SPECIFICATION

(11) **EP 2 134 573 B1**
(45) Date of publication and mention of the grant of the patent: **10.08.2011**
(21) Application number: 07741667.5
(22) Date of filing: 10.04.2007
(51) Int. Cl.: B60R 19/18

(54) **BUMPER BEAM FOR AUTOMOBILE VEHICLE**
STOSSFÄNGERTRÄGER FÜR KRAFTFAHRZEUG
POUTRE DE PARE-CHOCS POUR VEHICULE AUTOMOBILE

(43) Date of publication of application: 23.12.2009
(73) Proprietor: Honda Motor Co., Ltd., Minato-ku Tokyo 107-8556 (JP)
(72) Inventor: LEONHARDT, Sven, 63073 Offenbach / Am Main (DE); ISHII, Masashi, 63073 Offenbach / Am Main (DE)
(74) Representative: Prechtel, Jörg
(86) International application number: PCT/JP2007/058231
(87) International publication number: WO 2008/129654

(56) References cited:
- EP-A- 1 537 922
- WO-A-03/000440
- US-A1- 2004 262 930
- US-A1- 2005 046 226
- US-A1- 2005 225 101

## Description

### BACKGROUND OF THE INVENTION

The present invention relates to a bumper beam which is a part of a bumper attached to an automobile vehicle and especially to a bumper beam which is produced by roll-forming and effectively protects a body of an automobile vehicle and its inside from being crushed when the vehicle undergoes a collision.

The bumper for the automobile vehicle is a structural part to protect parts such as an engine inside a front bonnet as well as passengers by reducing a shock on collision of a vehicle. A bumper consists of a bumper cover and a bumper beam which is a reinforcing member and disposed inside the bumper cover. In order to reduce a weight of a vehicle a beam having a hollow structure is usually used for the bumper beam which is made of steel sheets. This type of the bumper beam is produced by press-forming and welding a couple of steel sheets or roll forming a steel sheet which is disclosed in Japanese Laid-Open Patent Application No.H11- 77149 and European Laid-Open Patent Application No. 1537922.

As disclosed in Japanese Laid-Open Patent No.2003-220909, a bumper beam with a reinforcing member has been also developed. In the case this type of the bumper beam portions of a bumper where high stiffness and strength are especially needed are reinforced with additional reinforcing members.

Comparing between the currently used bumper beams, one produced of steel sheets by press-forming and welding and the other produced of a steel sheet by roll forming, the former one made by press-forming and welding needs flange portions to be joined and can not be made lighter than the latter one made by roll forming. Accordingly the roll formed bumper beam is favorable on reducing vehicle body's weight.

However, in order to protect effectively a vehicle body and its inside as well as passengers from a shock on the vehicle undergoing a head-on collision, a reinforced portion has to be formed on the front of a bumper beam, and the shock on vehicle's head-on collision is absorbed and reduced by this reinforced portion. However in order to form such a reinforced portion on the front of a roll formed bumper beam so far developed an additional reinforcing member has to be attached to the roll formed bumper beam. Therefore an additional process to attach a reinforcing member to a roll formed bumper beam is necessary for the roll formed bumper beam so far developed.

A bumper beam according to the preamble of claim 1 is disclosed in EP 1537922 A

The objective of the present invention is intended to solve the above mentioned problem and provide the bumper beam for automobile vehicles to protect effectively a vehicle body and its inside from the vehicle undergoing a head-on collision without an additional reinforcing member attached.

According to the present invention, this object is achieved by a bumper beam according to claim 1.

### SUMMARY OF THE INVENTION

A first aspect of the present invention provides a bumper beam for an automobile vehicle, comprising a beam produced of a single metal sheet, of which cross-sectional shape varies in a longitudinal direction. A middle portion of the beam in the longitudinal direction is protruded toward a front of the automobile vehicle.

According to this aspect of the present invention, the bumper beam has a shape varying in its longitudinal direction and a bulging portion protruded toward vehicle's front. Due to this structure the bumper beam becomes stiff against bending and a shock a vehicle receives on collision is reduced with the bulging portion deformed. The bumper beam is produced of a single metal sheet without any discrete reinforcing part.

A second aspect of the present invention provides a bumper beam for an automobile vehicle according to the first aspect, end sides of the single metal sheet are attached to each other by roll forming and joined with each other from one end of the beam to the other in the longitudinal direction.

According to this aspect of the invention, the bumper beam deforms as a whole and a large local deformation of the bumper beam is prevented on vehicle's collision.

A third aspect of the present invention provides a bumper beam for an automobile vehicle according to the first aspect, wherein an opening portion is formed between a couple of front side surfaces of the beam from one end of the beam to the other in the longitudinal direction.

According to this aspect of the invention, the bumper beam can deforms relatively easily, which results in easily reducing a shock on vehicle's collision.

A fourth aspect of the present invention provides a bumper beam for an automobile vehicle according to the first aspect, wherein the single metal sheet is made by joining a plurality of metal sheets of different materials.

According to this aspect of the invention, portions in the bumper beam to effectively stiffen the bumper beam are made of a material with high tensile strength, which contributes to reducing beam's weight.

The other features and advantages of the present invention become obvious from the following detailed description of the invention when taken in conjunction with the accompanying exemplary drawing.

### BRIEF DESCRIPTION OF THE DRAWINGS

The object and features of the present invention will become more readily apparent from the following detailed description taken in conjunction with the accompanying drawings in which:
Fig. 1 is a perspective view illustrating a bumper beam of the first embodiment of the present invention for an automobile vehicle;
Fig. 2 is a schematically explaining figure on the process of producing a bumper beam the first embodiment of the present invention for an automobile vehicle;
Fig. 3 is a perspective view of a metal sheet being roll formed into a work of a varying cross-sectional shape;
Fig. 4 is a perspective view illustrating a bumper beam of the first embodiment of the present of the present invention for an automobile vehicle;
Fig. 5 is a perspective view illustrating a bumper beam of the second embodiment of the present invention for an automobile vehicle;
Fig. 6 is a perspective view illustrating a bumper beam of the second embodiment of the present invention for an automobile vehicle;
Fig.7 is a perspective view illustrating a bumper beam of the second embodiment of the present invention for an automobile vehicle, and
Fig.8 is a schematically explaining figure on the process of producing a bumper beam of the third embodiment of the present invention for an automobile vehicle.

The same or corresponding elements or parts are designated with like references throughout the drawings.

### DETAILED DESCRIPTION OF THE INVENTION

### < First Embodiment >

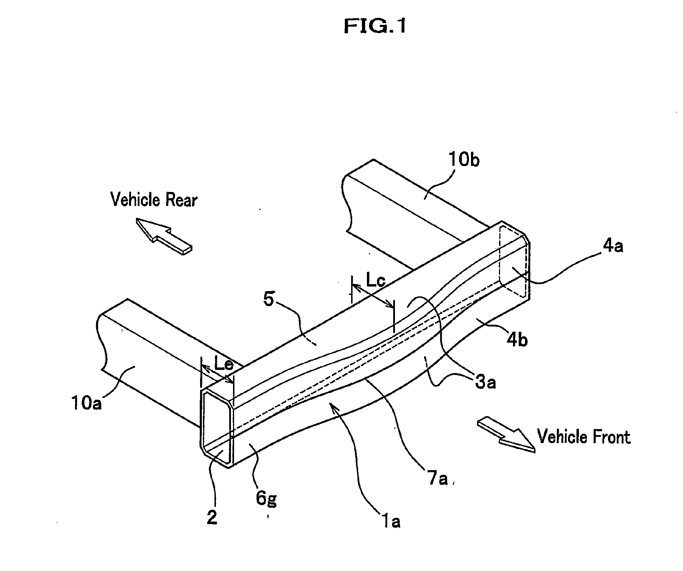

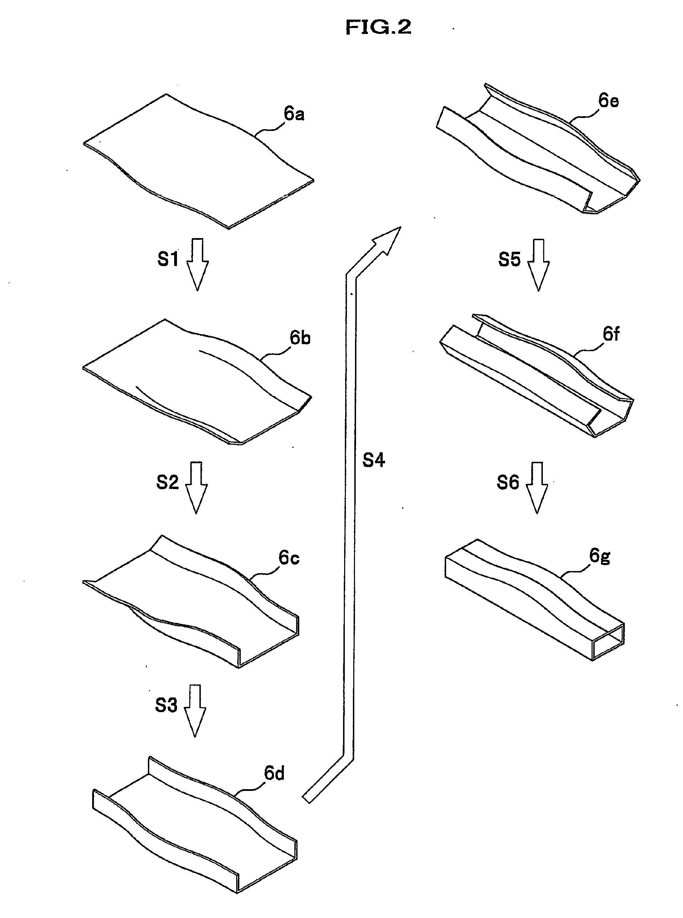

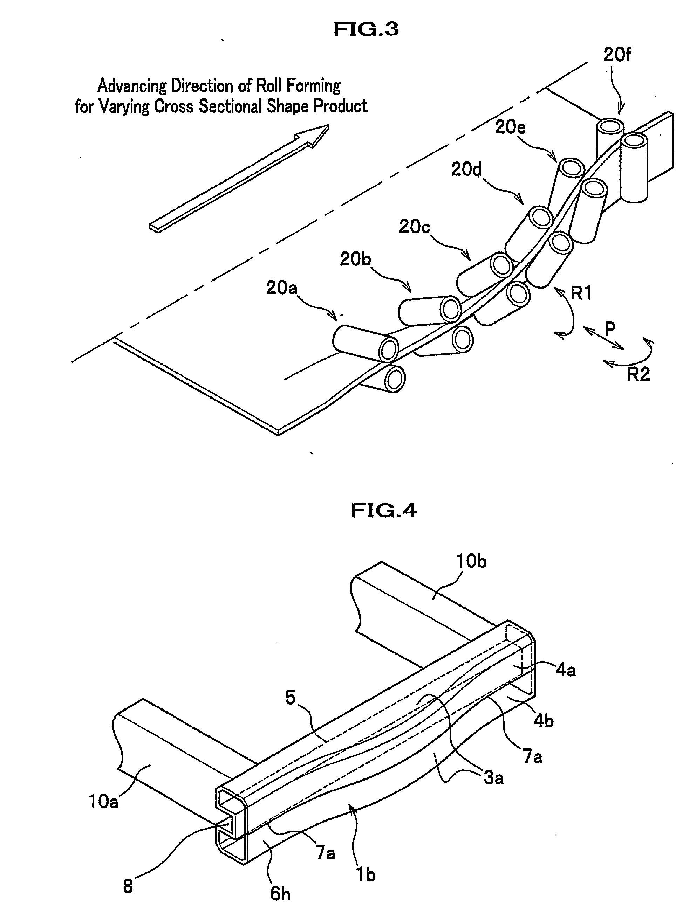

A bumper for a automobile vehicle of the first embodiment of the present invention is to be explained hereinafter in detail referring to Fig.1 to Fig.4. Fig.1 is a perspective view of a bumper beam for an automobile vehicle of the first embodiment of the present invention. Fig.2 is a schematically explaining figure indicating how a bumper beam for an automobile vehicle is formed in the roll forming process inclusive of the process to form a varying cross-sectional shape. Fig.3 is a figure indicating how a varying cross-sectional shape is formed. Fig.4 is a perspective view of a bumper beam for an automobile vehicle of the first embodiment of the present invention.

As seen in Fig.1 a bumper beam 1a for a an automobile vehicle is composed of a beam 6g which is joined with side frames 10a, 10b by welding or other joining techniques. The bumper beam 1a is attached to a vehicle body with beam front surfaces 4a, 4b of the beam 6g facing a front side of a vehicle and a beam rear surface 5 of the beam 6g facing a rear side of a vehicle.

The beam 6g is a hollow structure beam with a hollow 2 thereinside. The beam 6g is produced of a single metal sheet by roll forming. An attached linear portion 7a is formed by attaching the end side of the beam front surface 4a onto the end side of the beam front surface 4b. The end side of the beam front surface 4a is in contact with the end side of the beam front surface 4b. The attached linear portion 7a extends continuously in the longitudinal direction from one end to the other of the beam 6g. The end side of the beam front surface 4a is joined with the end side of the beam front surface 4b along the whole attached linear portion 7a by welding or other joining techniques.

Looking at the cross section of the beam 6g which is perpendicular to the longitudinal direction of the beam 6g in Fig. 1, the cross section part of the hollow 2 surrounded by the beam 6g varies in the longitudinal direction of the beam 6g and becomes gradually larger from an end of the beam 6g to the middle part of the beam 6g in its longitudinal direction. Accordingly the beam 6g has the cross section shape which varies in the longitudinal direction and a couple of bulging portions 3a in the middle of the beam 6g in the longitudinal direction. Due to these bulging portions 3 a the cross section length Lc of the middle part of the beam 6g in vehicle's front and rear direction is larger than the cross section length Le of the end part of the beam 6g in vehicle's front and rear direction. Accordingly cross-sectional moment of inertia of the beam 6g for bending in vehicle's front and rear direction becomes larger than a beam with a constant cross section instead of the bulging portions 3a. As a result the bending stiffness of the beam 6g becomes larger.

A beam rear surface 5 on which side flames 10a, 10b are joined is a flat surface. The bulging portions 3a protrudes toward vehicle's front when the bumper beam 1a is attached to vehicle's body.

Because an automobile vehicle to which a bumper beam 1a is attached has a couple of bulging portions 3a protruding toward automobile vehicle's front, the beat front surfaces 4a, 4b on the bulging portions 3a receive a collision shock when the automobile vehicle undergoes a head-on collision. If the shock on the head-on collision is relatively small, the beam 6g is not deformed and protects automobile vehicle's body and parts inside its body together with the side flames 10a, 10b. On the other hand, if the shock on the head-on collision is relatively large, the beam front surfaces 4a, 4b on the bulging portions 3a, which are joined with each other, are deformed and both of the whole bulging portions 3a are deformed. As a result, automobile vehicle's body and parts inside its body as well as passengers inside are protected because the reduced shock on the head-on collision is transmitted to them.

Accordingly no additional discrete reinforcement part is required to protect automobile vehicle's body and parts inside its body as well as passengers inside if use is made of the bumper beam 1a. Moreover the bumper beam is produced relatively easily as explained hereinafter.

The beam 6g of the bumper beam 1a is produced of a single metal sheet according to a roll forming process indicated in Fig. 2 and Fig.3. A metal sheet 6a is made by blanking press in advance. The shape of the metal sheet 6a is determined according to the shape of the bulging portion 3a indicated in Fig.1 to have the end sides of the beam front surfaces 4a, 4b attached to and in contact with each other.

As is understood in Fig.2, the roll forming processes S1 to S3 constitute a roll forming process to produce an intermediate product 6d with a varying cross-sectional shape in the longitudinal direction via intermediate products 6b, 6c of a single metal sheet 6a. This roll forming process consisting of the forming processes S1 to S3 is specifically indicated in Fig.3. In the roll forming process indicated in Fig.3 the roll forming is performed with roll pairs 20a, 20b, 20c, 20d, 20e and 20f. Each of roll pairs 20a, 20b, 20c, 20d, 20e and 20f is driven to rotate about each roll axis, turn in the direction in which a portion of the metal sheet 6a to be bent is bent (R1 direction in Fig.3), move in the direction perpendicular to the advancing direction of roll forming (P direction in Fig.3) and turn in the direction on the horizontal plane (R2 direction in Fig.2). Since each of roll pairs 20a, 20b, 20c, 20d, 20e and 20f is driven and controlled on its position and direction, the metal sheet 6a is made to advance between each pair of rolls while being in tangential contact with each pair of rolls. As a result, the intermediate product 6d with the varying cross-sectional shape in the longitudinal direction is produced via intermediate products 6b, 6c.

On the other hand the roll forming processes S4 to S6 constitute a roll forming process intended to produce roll formed products with an unvarying cross-sectional shape in the longitudinal direction and to be performed with roll pairs each of which has rolls unchanged on their position and direction.

Through the roll forming processes S4 to S6 the beam 6g is produced via intermediate products 6e, 6f. The beam 6g whose cross-sectional shape varies in its longitudinal direction is produced through a combination of a couple of the roll forming processes, a roll forming process intended to produce a product with a varying cross-sectional shape in its longitudinal direction and a roll forming process intended to produce a product with an unvarying cross-sectional shape in its longitudinal direction.

Making use of the roll forming processes of S1 to S6 above mentioned, the beam 6g can be produced of a metal sheet 6a made of high-tensile steels of martensite steel whose elongation is relatively small, an aluminum alloys and magnesium alloys. It is possible to reduce the weight of the bumper beam 1a by making use of these materials.

One example of this embodiment of the present invention indicated in Fig. 4 is a bumper beam 1b composed of a beam 6h in which a concave portion 8 is formed on the beam rear surface 5 in its longitudinal direction. Due to an effect of the concave portion 8 stiffness of the bumper beam 6h is higher than the bumper beam 6g and protects more effectively automobile vehicle's body and parts inside its body. This concave shape 8 is formed prior to the roll forming processes S1 to S3 in Fig.2, which constitute a roll forming process to produce a product with a varying cross-sectional shape in its longitudinal direction.

### < Second Embodiment >

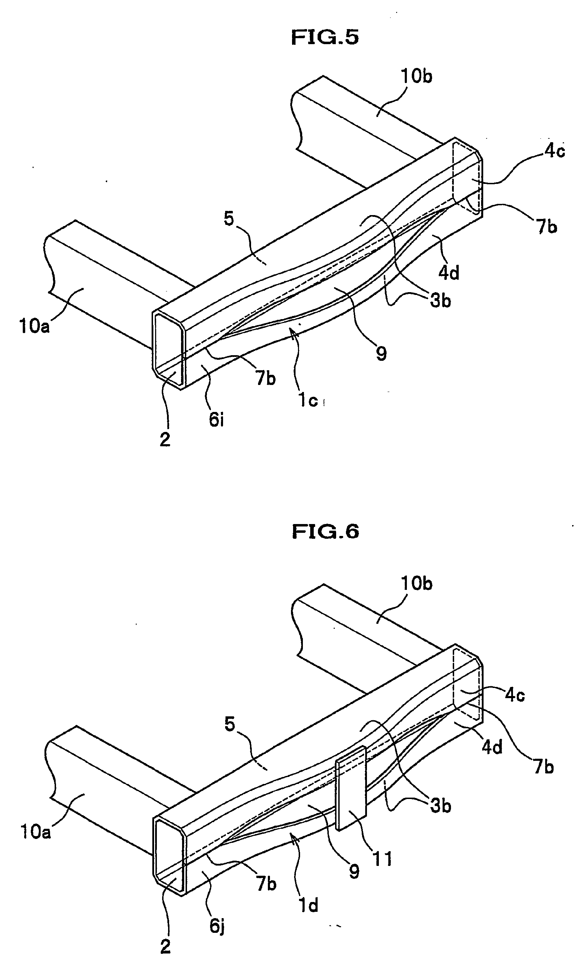

Looking at Fig.5 and Fig.6 the second embodiment of the present is explained hereinafter.

The second embodiment of the present invention is a bumper beam 1c composed of a beam 6i indicated in Fig.5. In the bumper beam 1c, end sides of the beam front surfaces 4c, 4d are not wholly attached to and joined with each other in its longitudinal direction and there is an opening portion formed in the middle part of the beam 6i in its longitudinal direction. There are a couple of attached linear portions 7b, 7b formed on both end sides of the beam 6i in its longitudinal direction. Therefore the end sides of the beam front surfaces 4c, 4d are attached to each other in the vicinity of each end of the beam 6i in its longitudinal direction and not attached to each other in the middle part of the beam 6i, where the bulging portions 3b are formed. The opening portion 6i is formed by altering the shape of the metal sheet 6a in Fig.2 so that the end sides of the beam front surfaces 4c, 4d are not to be attached to each other. It is possible to produce a beam 6i of a metal sheet 6a which does not undergo blanking press.

Except for the opening portion 9 formed in the beam 6i the bumper beam 1c in the second embodiment is the same as the bumper beam 1a.

Since the opening portion 9 is formed between the bulging portions 3b in middle part of the beam 1c in its longitudinal direction with the end sides of the beam front surfaces 4c, 4d not attached to and joined with each other in the case of the bumper beam 6i, each bulging portion 3b on the beam front surfaces 4c, 4d can deform relatively independent of the other. Accordingly the bumper beam 1c deforms more easily than the bumper beam 1a of the first embodiment and can reduces more effectively the shock on the head-on collision of an automobile vehicle.

A bumper beam 1d composed of a beam 6j indicated in Fig.6 also belongs to the second embodiment of the present invention. In the bumper beam 1d there is an opening portion 9 formed in the same way as the bumper beam 1c and a metal plate 11 that is joined with both the beam front surfaces 4c, 4d on both its ends and connects both the beam front surfaces 4c, 4d.

Due to the effect of the metal plate 11 connecting the beam front surfaces 4c, 4d, both bulging portions 3b on the beam front surfaces 4c, 4d on deform toward the inside of the opening portion 9. As a result the shock on the head-on collision of an automobile vehicle is reduced. The bulging portion 3b in the bumper beam 1c deforms less easily than the bulging portion 3b in the bumper beam 1b in Fig.5 and more easily than the bulging portion 3a in the bumper beam 1a in Fig.1, which has a closed cross-sectional shape.

### <Third Embodiment >

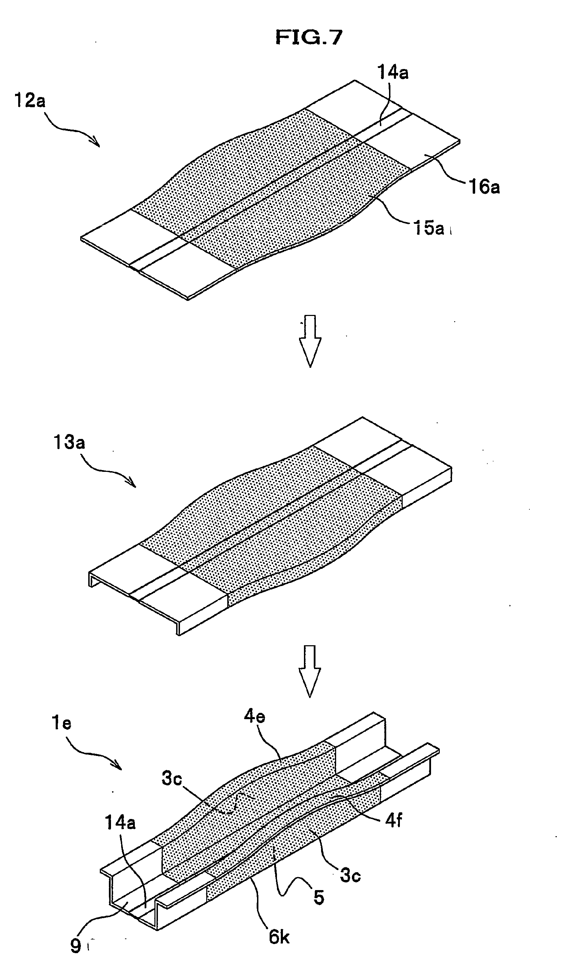

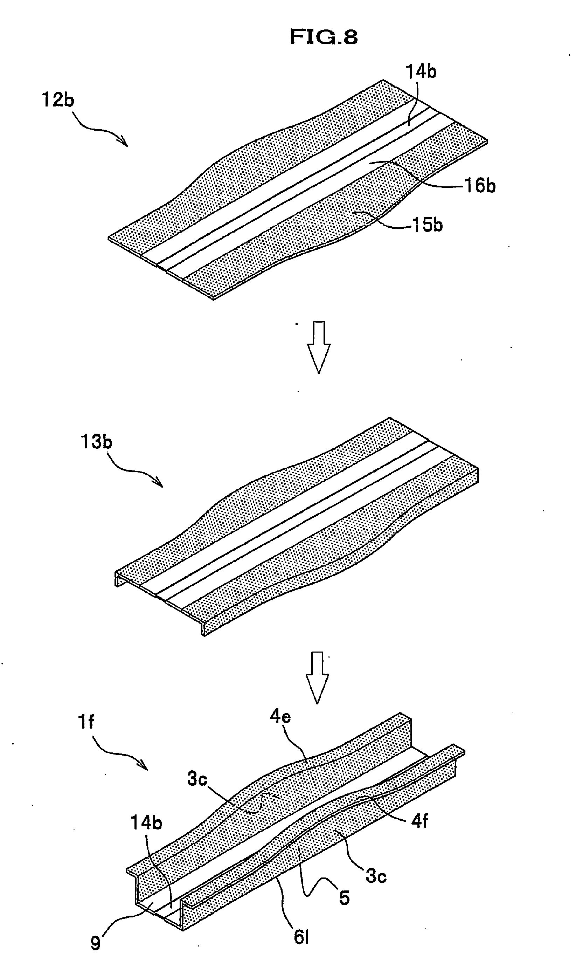

Fig. 7 and Fig.8 indicate beams used for the bumper beam of the third embodiment of the present invention and their production process. In the case of the bumper beam, beams 6k, 61 indicated respectively in Fig.7 and Fig.8 are used. To produce the beam 6k a roll forming process is performed to form the beam front surfaces 4e, 4f on and outside the beam 6k. This is also the case with the beam 61. Therefore to produce any of the beams 6k, 61 a metal sheet is roll formed to fold its side portion downward in the roll forming processes of S1 to S3 in Fig.2, which is intended for producing an intermediate product with a varying cross-sectional shape. As a result intermediate products 13a, 13b are produced respectively of blank materials 12a, 12b.

Both of the beams 6k, 61 have the following features in common. Bulging portions 3c are formed in the middle part of the beams 6k, 61 and beam front surfaces 4e, 4f are formed on and outside the beams 6k,61, which results in formation of an opening portion 9 on the front side of the beams 6k, 61.

As is the case with the beam 6g in the bumper beam 1a in Fig.1, each of the beams 6k, 61 has a structure reinforced with the bulging portions 3c without any additional discrete reinforcing part attached. Each bulging portion on the beam front surfaces 4e, 4f deforms independently, which results in reducing the shock on the head-on collision of an automobile vehicle. The bulging portion 3c in the bumper beams 1e, 1f deforms more easily than the bulging portions 3a, 3b in the bumper beams 1a, 1b, 1c. Therefore the bumper beam composed of any of the beams 6k, 61 is suited for an automobile vehicle in which reducing the shock on the head-on collision of a vehicle is a key to protect vehicle body and part inside it.

Both the beam 6k in Fig. 7 and the beam 61f in Fig.8 are produced respectively of the blank materials 12a, 12b. The blank material 12a for the beam 6k consists of a material A portion 15a and a material B portion 16a. The material A portion 15a is made of one material while the material B portion 16a is made of another different material. The material A portion 15a is joined with the material B portionl6a. The blank material 12b for the beam 61 consists of a material A portion 15b and a material B portion 16b. The material A portion 15a is made of one material while the material B portion 16a is made of another different material. The material A portion 15b is joined with the material B portion16b. The following effect is created using the beams 6k, 61 of different materials joined together.

For instance, the beam 6k in Fig.7 may be produced of a blank material 12a which is made of a 590MPa tensile strength steel sheet for the material B portion 16a and a 780MPa tensile strength steel sheet for the material A portion 15a. In this case, because the bulging portions 3c in this beam 6k are effectively reinforced with the material A portion of the 790MPa tensile strength sheet, the beam 6k is more stiffer than a beam made only of the 590MPa tensile strength steel sheet with the same form as the beam 6k.

In the case of the beam 61 in Fig.8, the portions inclusive of the bulging portions 3c, which are perpendicular to the beam front surfaces 4e, 4f, are produced only of the material A portion 15b. If this material A portion is made of the 780MPa tensile strength steel sheet, the beam 61 is stiffer than the beam 61 is made only of the 590MPa tensile strength steel sheet with the same form as the beam 61.

The blank material 12a is produced by joining a couple of different material sheets by laser welding or other techniques, rolling the joined sheet and blanking-pressing. The same way the blank material 12b is produced.

The material combination between the material A portions 15a, 15b and the material B portions 16a, 16b are made not only of steel sheets but also of aluminum alloy sheets of different tensile strengths including an aluminum sheet and magnesium alloy sheets of different tensile strengths including a magnesium sheet. Making use of these materials for the material A portions 15a, 15b and the material B portions 16a, 16b, it is possible to reduce the beam weight as well as effectively reinforce the beam.

As seen in Fig. 7, there is a thin portion 14a in the middle part in the lateral direction of the beam 6k, whose sheet thickness is smaller than that in the other part of the beam 6k and which extends from one end to the other in the longitudinal direction of the beam 6k. This thin portion 12a which exists in the blank material 12a is formed on a portion where high strength and high stiffness are not necessary and contributes to reducing beam's weight further. In the case of the beam 61 in Fig.8, the thin portion 14b, which exists in the blank material 12b, is formed and has the same function as the thin portion 14a in the beam 6k.

It is also possible to produce the beam 6g in the bumper beam 1a and the beam 6i in the bumper beam 6i of the blank material 12a or 12b.

The present invention is not limited to the first, second and third embodiments above explained and contains any possible embodiment within the scope of the appended claims.

## Claims

1. A bumper beam (1a,1b,1c,1d) for an automobile vehicle, comprising a beam (6g,6h,6i,6j,6k,6l) produced of a single metal sheet, of which a cross-sectional shape perpendicular to a front-rear direction of the automobile vehicle varies in a longitudinal direction thereof and enlarges from each end to a center thereof in the longitudinal direction, comprising:
a rear surface portion (5) which is at least partly flat and joined to each of a left side frame (10a) end and a right side frame (10b) end,
horizontal portions each of which is coupled with the rear surface portion (5), and front surface portions (4a,4b,4c,4d,4e,4f), each of which is coupled with the horizontal portion,
wherein the horizontal portion comprises a bulging portion (3a,3b,3c,) disposed in a middle portion in the longitudinal direction, of which a cross-sectional length in the front-rear direction of the automobile vehicle is larger than at an end of the horizontal portion, **characterised in that**
the front surface portion (4a,4b,4c,4d,4e,4f) coupled with the bulging portion protrudes toward a front of the automobile vehicle in the front-rear direction from the front surface portion (4a,4b,4c,4d,4e,4f) coupled with the horizontal portion outside the bulging portion (3a,3b,3c).

2. A bumper beam (1a,1b,1c,1d) for an automobile vehicle according to claim 1,
wherein the front surface portions (4a,4b,4c,4d,4e,4f) are attached and joined to each other from one end to the other end of the beam (6g,6h,6i,6j,6k,6l) in The longitudinal direction.

3. A bumper beam (1a,1b,1c,1d) for an automobile vehicle according to claim 1,
wherein the rear surface portion (5) comprises a concave portion (8) formed in the longitudinal direction from one end of the beam to the other end of the beam (6g,6h,6i,6j,6k,6l).

4. A bumper beam (1a,1b,1c,1d) for an automobile vehicle according to claim 1,
wherein the front surface portions (4a,4b,4c,4d,4e,4f) are partly attached and joined to each other from one end to the other end of the beam (6g,6h,6i,6j,6k,6l) in the longitudinal direction (9) and an opening (9) is formed between the front surface portions (4a,4b,4c,4d,4e,4f).

5. A bumper beam (1a,1b,1c,1d) for an automatic vehicle according to claim 4, further comprising
a metal plate (11) attached and joined to the front surface portions (4a,4b,4c,4d,4e,4f) across the opening (9).

6. A bumper beam (1a,1b,1c,1d) for an automobile vehicle according to claim 1,
wherein the front surface portions (4a,4b,4c,4d,4e,4f) are disposed off each other.

7. A bumper beam (1a,1b,1c,1d) for an automobile vehicle according to any of claims 1 to 6,
wherein the single metal sheet consists of a plurality of material sheets coupled with each other and a center portion of the beam (6g,6h,6i,6j,6k,6l) in the longitudinal direction including the bulging portion (3a,3b,3c) is produced of a more strengthened material sheet of the plurality of the material sheets than the other portions.

8. A bumper beam (1a,1b,1c,1d) for an automobile vehicle according to any of claims 1 to 6,
wherein the single metal sheet consists of a plurality of material sheets coupled with each other, and
wherein the horizontal portions and the front surface portions (4a,4b,4c,4d,4e,4f) are produced of a more strengthened material sheet of the plurality of the material sheets than the other portions.

## Patentansprüche

1. Stoßfängerträger (1a, 1b, 1c, 1d) für ein Kraftfahrzeug, umfassend:
einen Träger (6g, 6h, 6i, 6j, 6k, 61), der aus einem einzelnen Metallblech hergestellt ist, dessen Querschnittsform senkrecht zur Längsrichtung des Kraftfahrzeugs sich in dessen Längsrichtung ändert und vom einen Ende zur Mitte davon in der Längsrichtung erweitert ist, umfassend:
einen hinteren Oberflächenabschnitt (5), der zumindest teilweise flach ist und mit jedem Ende eines linken Seitenrahmens (10a) und einem Ende eines rechten Seitenrahmens (10b) verbunden ist,
horizontale Abschnitte, deren jeder mit dem hinteren Oberflächenabschnitt (5) verbunden ist, und
vordere Oberflächenabschnitte (4a, 4b, 4c, 4d, 4e, 4f), deren jeder mit dem horizontalen Abschnitt verbunden ist,
worin der horizontale Abschnitt einen Wölbungsabschnitt (3a, 3b, 3c) aufweist, der in einem Mittelabschnitt in der Längsrichtung angeordnet ist, dessen Querschnittslänge in der Längsrichtung des Kraftfahrzeugs größer ist als an einem Ende des horizontalen Abschnitts,
**dadurch gekennzeichnet, dass** der mit dem Wölbungsabschnitt verbundene vordere Oberflächenabschnitt (4a, 4b, 4c, 4d, 4e, 4f) in Längsrichtung von dem vorderen Oberflächenabschnitt (4a, 4b, 4c, 4d, 4e, 4f), der mit dem horizontalen Abschnitt außerhalb des Wölbungsabschnitts (3a, 3b, 3c) verbunden ist, zur Vorderseite des Kraftfahrzeugs vorsteht.

2. Stoßfängerträger (1a, 1b, 1c, 1d) für ein Kraftfahrzeug nach Anspruch 1, worin die vorderen Oberflächenabschnitte (4a, 4b, 4c, 4d, 4e, 4f) vom einen Ende zum anderen Ende des Trägers (6g, 6h, 6i, 6j, 6k, 61) in der Längsrichtung aneinander angebracht und miteinander verbunden sind.

3. Stoßfängerträger (1a, 1b, 1c, 1d) für ein Kraftfahrzeug nach Anspruch 1, worin der hintere Oberflächenabschnitt (5) einen konkaven Abschnitt (8) aufweist, der in der Längsrichtung vom einen Ende des Trägers zum anderen Ende des Trägers (6g, 6h, 6i, 6j, 6k, 61) ausgebildet ist.

4. Stoßfängerträger (1a, 1b, 1c, 1d) für ein Kraftfahrzeug nach Anspruch 1, worin die vorderen Oberflächenabschnitte (4a, 4b, 4c, 4d, 4e, 4f) vom einen Ende zum anderen Ende des Trägers (6g, 6h, 6i, 6j, 6k, 61) in der Längsrichtung teilweise aneinander angebracht und miteinander verbunden sind, und eine Öffnung (9) zwischen den vorderen Oberflächenabschnitten (4a, 4b, 4c, 4d, 4e, 4f) ausgebildet ist.

5. Stoßfängerträger (1a, 1b, 1c, 1d) für ein Kraftfahrzeug nach Anspruch 4, welcher ferner eine Metallplatte (11) aufweist, die mit den vorderen Oberflächenabschnitten (4a, 4b, 4c, 4d, 4e, 4f) über die Öffnung (9) hinweg angebracht und damit verbunden ist.

6. Stoßfängerträger (1a, 1b, 1c, 1d) für ein Kraftfahrzeug nach Anspruch 1, worin die vorderen Oberflächenabschnitte (4a, 4b, 4c, 4d, 4e, 4f) voneinander versetzt angeordnet sind.

7. Stoßfängerträger (1a, 1b, 1c, 1d) für ein Kraftfahrzeug nach einem der Ansprüche 1 bis 6, worin das einzelne Metallblech aus einer Mehrzahl von miteinander verbundenen Materialschichten besteht, und ein den Wölbungsabschnitt (3a, 3b, 3d) enthaltener Mittelabschnitt des Trägers (6g, 6h, 6i, 6j, 6k, 61) in der Längsrichtung aus einer stärkeren Materialschicht der Mehrzahl von Materialschicht als die anderen Abschnitte hergestellt ist.

8. Stoßfängerträger (1a, 1b, 1c, 1d) für ein Kraftfahrzeug nach einem der Ansprüche 1 bis 6, worin das einzelne Metallblech aus einer Mehrzahl von miteinander verbundenen Materialschichten besteht, und
worin die horizontalen Abschnitte und die vorderen Oberflächenabschnitte (4a, 4b, 4c, 4d, 4e, 4f) aus einer stärkeren Materialschicht der Mehrzahl der Materialschichten als die anderen Abschnitte hergestellt sind.

## Revendications

1. Poutre de pare-chocs (1a, 1b, 1c 1d) pour un véhicule automobile, comprenant
une poutre (6g, 6h, 6i, 6j, 6k, 61) produite en une seule tôle de métal, dont une forme en coupe perpendiculaire à une direction avant-arrière du véhicule automobile varie dans une direction longitudinale de celle-ci et augmente de chaque extrémité à un centre de celle-ci dans la direction longitudinale, comprenant :
une portion de surface arrière (5) qui est au moins en partie plate et jointe à chacune d'une extrémité de cadre latéral gauche (10a) et d'une extrémité de cadre latéral droit (10b),
des portions horizontales dont chacune est couplée à la portion de surface arrière (5), et
des portions de surface avant (4a, 4b, 4c, 4d, 4e, 4f), dont chacune est couplée à la portion horizontale,
où la portion horizontale comprend une portion de renflement (3a, 3b, 3c) disposée dans une portion médiane dans la direction longitudinale, dont une longueur en coupe dans la direction avant-arrière du véhicule automobile est plus grande qu'à une extrémité de la portion horizontale, **caractérisée en ce que**
la portion de surface avant (4a, 4b, 4c, 4d, 4e, 4f) couplée à la portion de renflement fait saillie vers un avant du véhicule automobile dans la direction avant-arrière à partir de la portion de surface avant (4a, 4b, 4c, 4d, 4e, 4f) couplée à la portion horizontale à l'extérieur de la portion de renflement (3a, 3b, 3c).

2. Poutre de pare-chocs (1a, 1b, 1c, 1d) pour un véhicule automobile selon la revendication 1,
dans laquelle les portions de surface avant (4a, 4b, 4c, 4d, 4e, 4f) sont attachées et jointes l'une à l'autre d'une extrémité à l'autre extrémité de la poutre (6g, 6h, 6i, 6j, 6k, 61) dans la direction longitudinale.

3. Poutre de pare-chocs (1a, 1b, 1c, 1d) pour un véhicule automobile selon la revendication 1,
dans laquelle la portion de surface arrière (5) comprend une portion concave (8) formée dans la direction longitudinale d'une extrémité de la poutre à l'autre extrémité de la poutre (6g, 6h, 6i, 6j, 6k, 61).

4. Poutre de pare-chocs (1a, 1b, 1c, 1d) pour un véhicule automobile selon la revendication 1,
dans laquelle les portions de surface avant (4a, 4b, 4c, 4d, 4e, 4f) sont en partie attachées et jointes l'une à l'autre d'une extrémité à l'autre extrémité de la poutre (6g, 6h, 6i, 6j, 6k, 61) dans la direction longitudinale et une ouverture (9) est formée entre les portions de surface avant (4a, 4b, 4c, 4d, 4e, 4f).

5. Poutre de pare-chocs (1a, 1b, 1c, 1d) pour un véhicule automobile selon la revendication 4, comprenant en outre
une plaque de métal (11) attachée et jointe aux portions de surface avant (4a, 4b, 4c, 4d, 4e, 4f) à travers l'ouverture (9).

6. Poutre de pare-chocs (1a, 1b, 1c, 1d) pour un véhicule automobile selon la revendication 1,
dans laquelle les portions de surface avant (4a, 4b, 4c, 4d, 4e, 4f) sont disposées hors les unes des autres.

7. Poutre de pare-chocs (1a, 1b, 1c, 1d) pour un véhicule automobile selon l'une quelconque des revendications 1 à 6,
dans laquelle la seule tôle de métal se compose d'une pluralité de tôles de matériau couplées les unes aux autres et une portion centrale de la poutre (6g, 6h, 6i, 6j, 6k, 61) dans la direction longitudinale incluant la portion de renflement (3a, 3b, 3c) est produite en une tôle de matériau plus renforcée de la pluralité des tôles de matériau que les autres portions.

8. Poutre de pare-chocs (1a, 1b, 1c, 1d) pour un véhicule automobile selon l'une quelconque des revendications 1 à 6,
dans laquelle la seule tôle de métal se compose d'une pluralité de tôles de matériau couplées les unes aux autres, et
où les portions horizontales et les portions de surface avant (4a, 4b, 4c, 4d, 4e, 4f) sont produites en une tôle de matériau plus renforcée de la pluralité des tôles de matériau que les autres portions.
